# EUROPEAN PATENT SPECIFICATION

(11) **EP 3 378 896 B1**
(45) Date of publication and mention of the grant of the patent: **30.09.2020**
(21) Application number: 16866324.3
(22) Date of filing: 15.11.2016
(51) Int. Cl.: C08L 27/18, C08F 2/44, C08F 8/00, C08F 210/06, C08F 214/24, C08J 3/24, C08K 5/14, C08K 5/19, C08K 5/49, C09K 3/10, C08K 5/17, C08K 5/50, C08F 214/26, C08F 4/40, C08K 5/00, C09D 127/18, C08F 2/26

(54) **CROSSLINKABLE COMPOSITION CONTAINING FLUORINATED COPOLYMER, CROSSLINKED PRODUCT, AND SEALING MATERIAL FOR SEMICONDUCTOR PRODUCTION EQUIPMENT**
FLUORCOPOLYMERGEHALTIGE VERNETZBARE ZUSAMMENSETZUNG, VERNETZTES OBJEKT UND DICHTUNGSMATERIAL FÜR EINE HALBLEITERHERSTELLUNGSVORRICHTUNG
COMPOSITION RÉTICULABLE CONTENANT UN COPOLYMÈRE FLUORÉ, OBJET RÉTICULÉ, ET MATÉRIAU D'ÉTANCHÉITÉ POUR DISPOSITIF DE PRODUCTION DE SEMI-CONDUCTEURS

(30) Priority: 19.11.2015 JP 2015226737
(43) Date of publication of application: 26.09.2018
(73) Proprietor: AGC Inc., Tokyo 100-8405 (JP)
(72) Inventor: YASUDA, Satoko, Tokyo 100-8405 (JP); NAGAI, Hiroki, Tokyo 100-8405 (JP); YAGI, Keisuke, Tokyo 100-8405 (JP); KOSE, Takehiro, Tokyo 100-8405 (JP); YAMADA, Takeshi, Tokyo 100-8405 (JP)
(74) Representative: Müller-Boré & Partner Patentanwälte PartG mbB
(86) International application number: PCT/JP2016/083865
(87) International publication number: WO 2017/086323

(56) References cited:
- WO-A1-2010/053056
- WO-A1-2012/073977
- JP-A- 2003 277 445
- JP-A- 2003 526 705
- JP-A- 2007 332 216
- US-A1- 2005 075 461
- US-A1- 2012 077 926

## Description

### TECHNICAL FIELD

The present invention relates to a crosslinkable composition containing a fluorinated copolymer excellent in crosslinkability, a crosslinked product obtained by crosslinking the crosslinkable composition, and a sealing material for a semiconductor production equipment.

### BACKGROUND ART

A crosslinked product (elastic body) obtained by crosslinking a crosslinkable fluorinated copolymer, which is excellent in heat resistance, chemical resistance, oil resistance, weather resistance, etc., is suitable for use in the severe environment where hydrocarbon polymers are unendurable. A fluorinated copolymer, which is usually poor in crosslinkability, is therefore required to improve the productivity of the crosslinked product. Accordingly, it has been studied to accelerate a crosslinking reaction by preparing a crosslinkable composition having, as a crosslinking agent, a peroxide or an organic onium compound blended in a fluorinated copolymer. For example, Patent Document 1 has proposed a crosslinked product obtained by crosslinking a composition having an organic onium compound blended in a terpolymer of vinylidene fluoride, tetrafluoroethylene and propylene.

As one example of use of a crosslinked product (elastic body) obtained by crosslinking a crosslinkable fluorinated copolymer in the severe environment, a sealing material for a chamber to be irradiated with plasma in a semiconductor production equipment, is mentioned. This sealing material has a problem in that cleanability in a chamber is deteriorated due to production of so-called particles (fine dust) from the site irradiated with plasma. In order to solve such a problem, Patent Document 2 has proposed a composition having an aromatic compound such as an isoindolinone pigment, a quinacridone pigment, a diketopyrrolopyrrole pigment or an anthraquinone pigment blended in a fluorinated copolymer.

### PRIOR ART DOCUMENTS

### PATENT DOCUMENTS

Patent Document 1: JP-A-H05-155943
Patent Document 2: Japanese Patent No. 4720501

### DISCLOSURE OF INVENTION

### TECHNICAL PROBLEM

However, the composition proposed in Patent Document 2 may have difficulty in controlling crosslinkability of a fluorinated copolymer or preparing the above aromatic compound. Therefore, a more simple crosslinkable composition being excellent in crosslinkability and such that less particles are produced upon plasma irradiation of a crosslinked product obtained, has been required.

It is an object of the present invention to provide a crosslinkable composition containing a fluorinated copolymer, which is excellent in crosslinkability and gives a crosslinked product with less particles produced upon plasma irradiation, a crosslinked product obtained by crosslinking the composition, and a sealing material for a semiconductor production equipment, containing the crosslinked product.

### SOLUTION TO PROBLEM

The present invention provides a crosslinkable composition, a crosslinked product obtained by crosslinking the composition, and a sealing material for a semiconductor production equipment, containing the crosslinked product, having the following constructions.
[1] A crosslinkable composition comprising the following copolymer (X), an organic peroxide, a crosslinking aid, and at least one member selected from the group consisting of a quaternary ammonium salt, a quaternary phosphonium salt and an organic amine, wherein the metal element content is less than 1 part by mass based on 100 parts by mass of the copolymer (X).
   Copolymer (X): A copolymer having an iodine atom and also having structural units based on tetrafluoroethylene and structural units based on propylene, wherein the content of the structural units based on vinylidene fluoride is less than 0.1 mol% in all structural units.
[2] The crosslinkable composition according to [1], wherein the total content of the structural units based on propylene and the structural units based on tetrafluoroethylene is from 90 to 100 mol% in all structural units in the copolymer (X).
[3] The crosslinkable composition according to [1] or [2], wherein the molar ratio of the structural units based on tetrafluoroethylene to the structural units based on propylene, is from 30/70 to 99/1.
[4] The crosslinkable composition according to any one of [1] to [3], wherein the copolymer (X) has structural units based on a monomer represented by the following formula (I):

   CR¹R²=CR³-R⁴-CR⁵=CR⁶R⁷ (I)

   wherein each of R¹, R², R³, R⁵, R⁶ and R⁷ which are independent of each other, is a hydrogen atom, a fluorine atom or a methyl group, R⁴ is a C₁₋₁₀ perfluoroalkylene group or a group having an etheric oxygen atom inserted between a carbon-carbon bond of the perfluoroalkylene group.
[5] The crosslinkable composition according to [4], wherein the proportion of the structural units based on the monomer represented by the formula (I) is from 0.1 to 1.5 mol%, in all structural units in the copolymer (X).
[6] The crosslinkable composition according to any one of [1] to [5], wherein the copolymer (X) is a copolymer having structural units based on a monomer having an iodine atom or a copolymer having an iodine atom derived from a chain transfer agent containing the iodine atom.
[7] The crosslinkable composition according to any one of [1] to [6], wherein the content of the iodine atom in the copolymer (X) is from 0.01 to 5.0 mass%.
[8] The crosslinkable composition according to any one of [1] to [7], wherein the content of the crosslinking aid is from 0.05 to 20 parts by mass, the content of the organic peroxide is from 0.05 to 10 parts by mass, and the total content of the quaternary ammonium salt, the quaternary phosphonium salt and the organic amine is from 0.05 to 10 parts by mass, based on 100 parts by mass of the copolymer (X).
[9] The crosslinkable composition according to any one of [1] to [8], which contains no fatty acid metal salt.
[10] A crosslinked product obtained by crosslinking the copolymer (X) in the crosslinkable composition as defined in any one of [1] to [9].
[11] A sealing material for a semiconductor production equipment, containing the crosslinked product as defined in [10].

### ADVANTAGEOUS EFFECTS OF INVENTION

The crosslinkable composition of the present invention is excellent in crosslinkability. Further, the crosslinked product and the sealing material for a semiconductor production equipment containing the crosslinked product of the present invention are capable of preventing production of particles upon plasma irradiation while maintaining mechanical properties equal to a conventional product.

### DESCRIPTION OF EMBODIMENTS

### <Crosslinkable composition>

The crosslinkable composition of the present invention comprises the after-mentioned copolymer (X), an organic peroxide, a crosslinking aid, and at least one member selected from the group consisting of a quaternary ammonium salt and a quaternary phosphonium salt, wherein the metal element content is less than 1 part by mass based on 100 parts by mass of the copolymer (X).

In the present invention, "metal element" means each of Group 1 element (alkali metal), Group 2 element (alkaline earth metal) and Group 3 to Group 12 elements (transitional metal) of the periodic table. "Metal element content" means a total content of all metal elements.

Hereinafter, tetrafluoroethylene is referred to as TFE, hexafluoropropylene is referred to as HFP, vinylidene fluoride is referred to as VdF, chlorotrifluoroethylene is referred to as CTFE, a perfluoro(alkyl vinyl ether) is referred to as PAVE, perfluoro(methyl vinyl ether) is referred to as PMVE and perfluoro(propyl vinyl ether) is referred to as PPVE.

Further, structural units based on the above monomer in a polymer are represented by adding units to the above abbreviations. For example, structural units based on TFE are referred to as "TFE units", structural units based on VdF are referred to as "VdF units", etc. Further, structural units based on propylene are referred to as "P units".

### [Copolymer (X)]

The copolymer (X) has an iodine atom and also has TFE units and P units. However, the content of the VdF units in the copolymer (X) is less than 0.1 mol% in all structural units. The copolymer (X) may contain structural units based on a monomer other than the TFE units, the P units and the VdF units.

The content of the above VdF units is preferably as low as possible, and it is preferably at most 0.01 mol%, more preferably at most 0.001 mol%, furthermore preferably substantially at most detection limit, most preferably 0 mol% (not contained). As mentioned below, if the VdF units are present in a crosslinked product, particles tend to be produced by the plasma irradiation.

The total content of the TFE units and the P units in all structural units in the copolymer (X) is preferably from 60 to 100 mol%, more preferably from 80 to 100 mol%, furthermore preferably from 90 to 100 mol%.

When the total content is at least the above lower limit, it is possible to further reduce particles to be produced upon plasma irradiation of a crosslinked product.

The above value being less than 100 mol% means that the copolymer (X) has structural units based on the after-mentioned monomers, and it is possible to adjust physical properties of the polymer according to these structural units.

The molar ratio of the TFE units to the P units, that is [TFE units/P units], is preferably from 30/70 to 99/1, more preferably from 50/50 to 95/5, furthermore preferably from 70/30 to 90/10. Within the above range, a crosslinked product is excellent in physical properties, and is excellent in heat resistance, chemical resistance, oil resistance and weather resistance.

The structural units based on a monomer other than TFE, propylene and VdF may be structural units based on a diene type monomer represented by the following formula (I) (hereinafter referred to as DM units), structural units based on a monomer having an iodine atom, or structural units based on the following another monomer. When the copolymer (X) has the DM units, a crosslinked product is excellent in tensile strength.

CR¹R²=CR³-R⁴-CR⁵=CR⁶R⁷ (I)

wherein each of R¹, R², R³, R⁵, R⁶ and R⁷ which are independent of each other, is a hydrogen atom, a fluorine atom or a methyl group, R⁴ is a C₁₋₁₀ perfluoroalkylene group or a group having an etheric oxygen atom between a carbon-carbon bond or at one terminal or both terminals of the perfluoroalkylene group.

With a view to increasing the crosslinkability and the heat resistance of the copolymer (X), R¹, R², R³, R⁵, R⁶ and R⁷ in the above compound are preferably a hydrogen atom or a fluorine atom, and it is more preferred that all of R¹, R², R³, R⁵, R⁶ and R⁷ are fluorine atoms.

R⁴ may be linear or branched, but is preferably linear. The number of carbon atoms in R⁴ is preferably from 2 to 8, more preferably from 3 to 7, furthermore preferably from 3 to 6, particularly preferably from 3 to 5. Further, the number of the etheric oxygen atom in R⁴ is preferably from 0 to 3, more preferably 1 or 2. One or two etheric oxygen atoms are preferably present at the terminals of a perfluoroalkylene group. When R⁴ is within such a suitable range, a crosslinked product has an excellent tensile strength and/or a smaller compression set at a high temperature.

The diene type monomer represented by the formula (I) may, for example, be a compound having a vinyl group or a trifluorovinyl group bonded, via or without an etheric oxygen, to each terminal of the C₁₋₁₀ perfluoroalkylene group.

As a suitable specific example of the diene type monomer, CF₂=CFO(CF₂)₃OCF=CF₂, CF₂=CFO(CF₂)₄OCF=CF₂ or CH₂=CH(CF₂)₆CH=CH₂ may be mentioned. The copolymer (X) having the DM units based on at least one of these monomers, has an excellent tensile strength and/or a smaller compression set at a high temperature.

When the diene type monomers are copolymerized, at least one of the polymerizable double bonds at both terminals of the monomer undergoes a reaction during the polymerization, whereby the copolymer (X) having a branched chain is obtained.

As the copolymer (X) has a branched chain, the crosslinking reactivity improves, whereby a crosslinked product having an excellent tensile strength and smaller compression set is obtained.

The content of the DM units in all structural units in the copolymer (X), is preferably from 0.1 to 1.5 mol%, more preferably from 0.15 to 0.8 mol%, furthermore preferably from 0.25 to 0.6 mol%.

When the content is at least the lower limit of the above range, the crosslinkability is excellent, whereby a crosslinked product has excellent tensile strength and has a smaller compression set at a high temperature.

When the content is at most the upper limit of the above range, it is possible to securely prevent or further reduce cracks of the crosslinked product when stress such as bending is applied at a high temperature while the above excellent physical properties are maintained.

The copolymer (X) may have structural units based on a monomer having an iodine atom. When the monomer having an iodine atom is copolymerized, it is possible to introduce the iodine atom to the side chain of the copolymer (X).

The monomer having an iodine atom may, for example, be iodoethylene, 4-iodo-3,3,4,4-tetrafluoro-1-butene, 2-iodo-1,1,2,2,-tetrafluoro-1-vinyloxyethane, 2-iodoethyl vinyl ether, allyl iodide, 1,1,2,3,3,3-hexafluoro-2-iodo-1-(perfluorovinyloxy)propane, 3,3,4,5,5,5-hexafluoro-4-iodopentene, iodotrifluoroethylene or 2-iodoperfluoro(ethyl vinyl ether).

The content of the structural units based on the monomer having an iodine atom is preferably from 0.001 to 2.0 mol%, more preferably from 0.01 to 1.0 mol%, particularly preferably from 0.01 to 0.5 mol%, in all structural units in the copolymer (X).

Such another monomer may be at least one member selected from the group consisting of a fluorinated monomer such as HFP, PAVE, vinyl fluoride, pentafluoropropylene, perfluorocyclobutene, or a (perfluoroalkyl)ethylene such as CH₂=CHCF₃, CH₂=CHCF₂CF₃, CH₂=CHCF₂CF₂CF₃, CH₂=CHCF₂CF₂CF₂CF₃ or CH₂=CHCF₂CF₂CF₂CF₂CF₃, and a non-fluorinated monomer such as an α-olefin such as ethylene, isobutylene or pentene, a vinyl ether such as methyl vinyl ether, ethyl vinyl ether, propyl vinyl ether or butyl vinyl ether, or a vinyl ester such as vinyl acetate, vinyl propionate, vinyl butyrate, vinyl caproate or vinyl caprylate.

PAVE is preferably a monomer represented by the following formula (II):

CF₂=CF-O-R^{f} (II)

wherein R^{f} is a perfluoroalkyl group which may contain a C₁₋₈ etheric oxygen atom.

The number of carbon atoms of R^{f} is preferably from 1 to 6, more preferably from 1 to 5.

As a specific example of PAVE, PMVE, perfluoro(ethyl vinyl ether), PPVE, perfluoro(3,6-dioxa-1-heptene), perfluoro(3,6-dioxa-1-octene) or perfluoro(5-methyl-3,6-dioxa-1-nonene) may be mentioned.

The content of the structural units based on another monomer, in all structural units (100 mol%) in the copolymer (X), may be suitably adjusted, for example, within a range of from 0.1 to 1.5 mol%.

As a specific example of the combination of the structural units constituting the copolymer (X), the following copolymers (X1) to (X3) may, for example, be mentioned. The copolymers (X1) to (X3) are excellent in crosslinkability. Among them, the copolymer (X1) and the copolymer (X3) are more preferred, and the copolymer (X1) is furthermore preferred since a resulting crosslinked product is excellent in mechanical properties, heat resistance, chemical resistance, oil resistance and weather resistance.
Copolymer (X1): combination of TFE units and P units
Copolymer (X2): combination of TFE units, P units and PPVE units
Copolymer (X3): completion of TFE units, P units and PMVE units

The copolymer composition in the copolymer (X1) to (X3) is preferably within the following range (molar ratio). Within the following range, the crosslinkability of the copolymer is more excellent, and further a resulting crosslinked product is excellent in mechanical properties, heat resistance, chemical resistance, oil resistance and weather resistance.
Copolymer (X1): TFE units/P units=30/70 to 90/10 (molar ratio)
Copolymer (X2): TFE units/P units/PPVE units=30 to 70/10 to 60/10 to 40 (molar ratio)
Copolymer (X3): TFE units/P units/PMVE units=30 to 70/10 to 60/10 to 40 (molar ratio)

Here, the total content of the respective structural units in the above copolymers (X1) to (X3) is preferably from 60 to 100 mol%, more preferably from 80 to 100 mol%, furthermore preferably from 90 to 100 mass%, in all structural units in the copolymer.

The copolymer (X) in the present invention has an iodine atom.

It is preferred that the iodine atom is present at a terminal of the copolymer (X) (polymer chain). Here, the terminal of the polymer chain includes both of a terminal of the main chain and a terminal of the branched chain in the copolymer (X).

The content of the iodine atom in the copolymer (X) is preferably from 0.01 to 5.0 mass%, more preferably from 0.05 to 2.0 mass%, most preferably from 0.05 to 1.0 mass%.

When the content of the iodine atom is within the above range, the crosslinkability of the copolymer (X) is more excellent, and the mechanical properties of the resulting crosslinked product become more excellent.

As the crosslinking properties of the copolymer (X), M_{H}-M_{L} (crosslinking degree) measured by the after-mentioned method in Examples may be mentioned. Usually, the larger the value of the crosslinking degree is, the higher the crosslinkability becomes. The crosslinking degree of the copolymer (X) is preferably from 30 to 150 dNm, more preferably from 50 to 130 dNm, furthermore preferably from 60 to 100 dNm.

When the crosslinking degree is within the above range, a crosslinking reaction proceeds at an appropriate speed, and a resulting crosslinked product has an excellent tensile strength and a smaller compression set at a high temperature.

A method for producing the copolymer (X) may, for example, be the following method. Further, the copolymer (X) is not limited to one produced by the following production method.

### [Method for producing copolymer (X)]

A method for producing the copolymer (X) may, for example, be a method of copolymerizing TFE, propylene and, optionally, e.g. the above diene type monomer, in the presence of e.g. a radical polymerization initiator and an iodine compound represented by the formula RI₂ (wherein, R is an alkylene group or an perfluoroalkylene group having at least three carbon atoms).

The iodine compound represented by the formula RI₂ is a compound having iodine atoms bonded to both terminals of an alkylene group or a perfluoroalkylene group having at least 3 carbon atoms. As a specific example, 1,3-diiodopropane, 1,4-diiodobutane, 1,6-diiodohexane, 1,8-diiodooctane, 1,3-diiodoperfluoropropane, 1,4-diiodoperfluorobutane, 1,6-diiodoperfluorohexane or 1,8-diiodoperfluorooctane may, for example, be mentioned. The number of carbon atoms in the iodine compound represented by the formula RI₂ is preferably from 3 to 8, more preferably from 3 to 6. The iodine compound represented by the formula RI₂ is more preferably an iodine compound having a perfluoroalkylene group, most preferably 1,4-diiodoperfluorobutane.

Such an iodine compound functions as a chain transfer agent, whereby it is possible to introduce iodine atoms to the terminal of the main chain of the copolymer (X) upon copolymerization of the respective monomers as mentioned above in the presence of such an iodine compound. Further, in this production method, in a case where the copolymer (X) having a branched chain is obtained, it is possible to introduce iodine atoms to the terminal of the branched chain as well. Accordingly, the terminal of a polymer chain having iodine atoms may be a terminal of the main chain or a terminal of the branched chain.

The amount of an iodine compound present at the time of carrying out a copolymerization reaction may suitably be adjusted depending on a production amount of the copolymer (X). For example, it is preferably from 0.005 to 10 parts by mass, more preferably from 0.02 to 5 parts by mass, based on 100 parts by mass of the copolymer (X).

The method of polymerization for the copolymer (X) may, for example, be an emulsion polymerization method, a solution polymerization method, a suspension polymerization method or a bulk polymerization method. Preferred is an emulsion polymerization method of copolymerizing monomers in an aqueous medium in the presence of an emulsifier, in view of easy controllability of the molecular weight and the copolymer composition and excellent productivity of the copolymer (X).

The aqueous medium is preferably water or water containing a water soluble organic solvent.

The water soluble organic solvent may, for example, be tert-butanol, propylene glycol, dipropylene glycol, dipropylene glycol monomethyl ether or tripropylene glycol, and it is preferably tert-butanol, propylene glycol or dipropylene glycol monomethyl ether.

In a case where the aqueous medium contains a water soluble organic solvent, the content of the water soluble organic solvent is preferably from 1 to 50 parts by mass, more preferably from 3 to 20 parts by mass, based on 100 parts by mass of water.

In the emulsion polymerization method, the pH of the aqueous medium is preferably from 7 to 14, more preferably from 7 to 11, furthermore preferably from 7.5 to 11, most preferably from 8 to 10.5. In a case where the pH is higher than 7, stability of the iodine compound is sufficiently secured, and the crosslinkability of the copolymer (X) to be obtained is sufficiently secured.

The period over which the pH of the aqueous medium is maintained within the above range is most preferably the entire polymerization period from initiation to completion of the emulsion polymerization, but may not be the entire polymerization period. The period over which the pH is within the above range, is preferably at least 80%, more preferably at least 90%, furthermore preferably at least 95% of the entire polymerization period.

To adjust the pH, it is preferred to use a pH buffer. The pH buffer may, for example, be an inorganic acid salt. The inorganic acid salt may, for example, be a phosphate such as disodium hydrogen phosphate or sodium dihydrogen phosphate, or a carbonate such as sodium hydrogen carbonate or sodium carbonate. Specifically, the phosphate may, for example, be more preferably disodium hydrogen phosphate dihydrate or disodium hydrogen phosphate dodecahydrate.

The emulsifier is preferably an ionic emulsifier or a reactive emulsifier, more preferably an anionic emulsifier, in view of excellent mechanical and chemical stability of a latex of the copolymer (X) to be obtained. The anionic emulsifier is preferably e.g. a hydrocarbon emulsifier such as sodium lauryl sulfate or sodium dodecylbenzenesulfonate; a fluorinated alkylcarboxylate or its salt such as ammonium perfluorooctanoate, ammonium perfluorohexanoate or ammonium ω-hydroperfluorooctanoate; or an emulsifier represented by the following formula (III) (hereinafter referred to as an emulsifier (III)); or CF₃O(CF₂O)ₙCF₂COONH₄ (wherein n=2 or 3).

F(CF₂)ₚO(CF(X)CF₂O)_{q}CF(X)COOA (III)

In the above formula (III), X is a fluorine atom or a C₁₋₃ perfluoroalkyl group, A is a hydrogen atom, an alkali metal or NH₄, p is an integer of from 1 to 10, and q is an integer of from 0 to 3.

In the above formula (III), p is preferably from 1 to 4, more preferably from 1 to 3. q is preferably from 0 to 2, more preferably from 1 to 2. A is preferably a hydrogen atom, Na or NH₄, more preferably NH_{4.}

Specific examples of the emulsifier (III) in a case where A in the above formula (III) is NH₄ will be mentioned below.

CF₃OCF₂CF₂OCF₂COONH₄

CF₃O(CF₂CF₂O)₂CF₂COONH₄

F(CF₂)₂OCF₂CF₂OCF₂COONH₄

F(CF₂)₂O(CF₂CF₂O)₂CF₂COONH₄

CF₃O(CF(CF₃)CF₂O)₂CF(CF₃)COONH₄

F(CF₂)₂O(CF(CF₃)CF₂O)₂CF(CF₃)COONH₄

F(CF₂)₃O(CF(CF₃)CF₂O)₂CF(CF₃)COONH₄

F(CF₂)₃OCF₂CF₂OCF₂COONH₄

F(CF₂)₃O(CF₂CF₂O)₂CF₂COONH₄

F(CF₂)₄OCF₂CF₂OCF₂COONH₄

F(CF₂)₄O(CF₂CF₂O)₂CF₂COONH₄

CF₃OCF(CF₃)CF₂OCF(CF₃)COONH₄

F(CF₂)₂OCF(CF₃)CF₂OCF(CF₃)COONH₄

F(CF₂)₃OCF(CF₃)CF₂OCF(CF₃)COONH₄

The reactive emulsifier is not particularly limited so long as it is a compound having at least one unsaturated bond and at least one hydrophilic group, and may, for example, be CH₂=CFCF₂OCF(CF₃)CF₂OCF(CF₃)COONH₄, CF₂=CFOCF(CF₃)CF₂OCF(CF₃)COONH₄.

The amount of the emulsifier to be used is preferably from 0.01 to 10 parts by mass, more preferably from 0.1 to 5 parts by mass, most preferably from 0.1 to 2 parts by mass, based on 100 parts by mass of the aqueous medium.

As a suitable radical polymerization initiator in the method for producing the copolymer (X), a water-soluble polymerization initiator or a redox polymerization initiator is preferred.

The water-soluble polymerization initiator may, for example, be a persulfate such as ammonium persulfate, sodium persulfate or potassium persulfate; or an organic polymerization initiator such as disuccinic acid persulfate or azobisisobutylamidine dihydrochloride. Among them, a persulfate is preferred, and ammonium persulfate is more preferred.

The amount of the water-soluble polymerization initiator to be used is preferably from 0.0001 to 3 mass%, more preferably from 0.001 to 1 mass%, to the total mass of the monomers.

The redox polymerization initiator may be a polymerization initiator having a persulfate and a reducing agent combined. Among them, a polymerization initiator capable of polymerizing respective monomers at a polymerization temperature within a range of from 0°C to 60°C. As a specific example of the persulfate constituting the redox polymerization initiator, ammonium persulfate or an alkali metal persulfate such as sodium persulfate or potassium persulfate, may be mentioned. Among them, ammonium persulfate is preferred. The reducing agent to be combined with the persulfate may, for example, be a thiosulfate, a sulfite, a bisulfite, a pyrosulfite or a hydroxymethanesulfinate, and is preferably a hydroxymethanesulfinate, most preferably sodium hydroxymethanesulfinate.

In the redox polymerization initiator, it is preferred that a small amount of iron, an iron salt, silver sulfate or the like preferably coexists as a third component, more preferably a water soluble iron salt coexists.

Specifically, the water soluble iron salt may, for example, be ferrous sulfate, ferric sulfate, iron(II) nitrate, iron(III) nitrate, ferrous chloride, ferric chloride, ferrous ammonium sulfate or ferric ammonium sulfate.

It is preferred to add a chelate agent when the redox polymerization initiator is used. As the chelate agent, disodium ethylenediaminetetraacetate is preferred.

In the redox polymerization initiator, the amount of the persulfate to be used is preferably from 0.001 to 3 mass%, more preferably from 0.01 to 1 mass%, particularly preferably from 0.05 to 0.5 mass% in the aqueous medium. The amount of the reducing agent to be used is preferably from 0.001 to 3 mass%, more preferably from 0.01 to 1 mass%, particularly preferably from 0.05 to 0.5 mass% in the aqueous medium.

Further, the amount of the third component to be used, such as iron, the iron salt such as a ferrous salt or silver sulfate is preferably from 0.0001 to 0.3 mass%, more preferably from 0.001 to 0.1 mass%, particularly preferably from 0.01 to 0.1 mass% in the aqueous medium. The amount of the chelate agent to be used is preferably from 0.0001 to 0.3 mass%, more preferably from 0.001 to 0.1 mass%, particularly preferably from 0.01 to 0.1 mass% in the aqueous medium.

Polymerization conditions such as polymerization pressure or polymerization temperature in the method for producing the copolymer (X) are suitably selected depending on e.g. a composition of monomers or a decomposition temperature of a radical polymerization initiator.

The polymerization pressure is preferably from 1.0 to 10 MPaG, more preferably from 1.5 to 5.0 MPaG, most preferably from 2.0 to 4.0 MPaG.

When the polymerization pressure is at least 1.0 MPaG, the polymerization rate is sufficiently maintained, the reaction is easily controlled, and excellent productivity is obtained. When the polymerization pressure is at most 10 MPaG, it is possible to produce the copolymer (X) by an inexpensive general-purpose polymerization apparatus.

The polymerization temperature is preferably from 0 to 60°C, more preferably from 10 to 50°C, particularly preferably from 20 to 40°C.

When the polymerization temperature is within the above range, the copolymer (X) excellent in the crosslinkability is easily obtained, and the mechanical properties of the crosslinked properties is excellent.

In the method for producing the copolymer (X), the polymerization rate is preferably from 10 to 100 g/L·hr, more preferably from 5 to 70 g/L·hr, furthermore preferably from 30 to 50 g/L·hr. When the polymerization rate is at least the above lower limit, practical productivity is achieved. When the polymerization rate is at most the above upper limit, the molecular weight of the copolymer (X) to be obtained becomes sufficiently high, whereby the crosslinkability is also excellent.

A method for isolating the copolymer (X) from a latex obtained by the emulsion polymerization method may, for example, be a coagulation method by a known method.

The coagulation method may, for example, be a method of adding a metal salt to the latex for salting out, a method of adding an inorganic acid such as hydrochloric acid to the latex, a method of mechanically shearing the latex, or a method of freezing and thawing the latex. It is also preferred that the latex is diluted with e.g. water as the case requires and then coagulated.

It is preferred that the copolymer (X) isolated is dried by a drying device such as an oven. A drying temperature is preferably from 60 to 150°C, more preferably from 80 to 120°C. Within this range, the crosslinkability of the copolymer (X) dried becomes more excellent, and the mechanical properties of the crosslinked product are more excellent.

### [Organic peroxide]

The organic peroxide contained in the crosslinkable composition of the present invention, functioning as a crosslinking agent, is preferably an organic peroxide which generates peroxide radicals by e.g. heat or light. Such an organic peroxide may, for example, be a dialkyl peroxide, 1,1-di(tert-butylperoxy)-3,3,5-trimethylcyclohexane, 2,5-dimethylhexane-2,5-dihydroxyperoxide, benzoyl peroxide, tert-butylperoxybenzene, 2,5-dimethyl-2,5-di(benzoylperoxy)hexane, tert-butylperoxy maleic acid or tert-butylperoxyisopropylcarbonate. Among them, a dialkyl peroxide is preferred.

The dialkyl peroxide may, for example, be di-tert-butyl peroxide, tert-butyl cumyl peroxide, dicumyl peroxide, a,a-bis(tert-butylperoxy)-p-diisopropylbenzene, 2,5-dimethyl-2,5-di(tert-butylperoxy)hexane or 2,5-dimethyl-2,5-di(tert-butylperoxy)-3-hexyne.

The content of the organic peroxide in the crosslinkable composition is preferably from 0.05 to 10 parts by mass, more preferably from 0.1 to 5 parts by mass, furthermore preferably from 0.5 to 3 parts by mass, based on 100 parts by mass of the copolymer (X). When the content of the organic peroxide is within the above range, the crosslinking rate is appropriate, and a resulting crosslinked product has an excellent tensile strength and a smaller compression set at a high temperature.

### [Crosslinking aid]

The crosslinking aid contained in the crosslinkable composition of the present invention is used for the purpose of further improving crosslinkability at the time of crosslinking the copolymer (X). Such a crosslinking aid may, for example, be triallyl cyanurate, triallyl isocyanurate, trimethallyl isocyanurate, 1,3,5-triacryloylhexahydro-1,3,5-triazine, triallyl trimellitate, m-phenylenediaminebismaleimide, p-quinone dioxime, p,p'-dibenzoylquinone dioxime, dipropargyl terephthalate, diallyl phthalate, N,N',N",N"'-tetraallyl terephthalamide or a vinyl group-containing siloxane oligomer (such as polymethylvinylsiloxane or polymethylphenylvinylsiloxane). Among them, triallyl cyanurate, triallyl isocyanurate or trimethallyl isocyanurate is preferred, and triallyl isocyanurate is more preferred.

The content of the crosslinking aid in the crosslinkable composition is preferably from 0.05 to 20 parts by mass, more preferably from 0.5 to 12 parts by mass, furthermore preferably from 1 to 8 parts by mass, based on 100 parts by mass of the copolymer (X). When the content of the crosslinking aid is within the above range, the crosslinking rate is appropriate, a resulting crosslinked product has an excellent tensile strength and a smaller compression set at a high temperature.

### [Quaternary ammonium salt, quaternary phosphonium salt and organic amine]

At least one member selected from the group consisting of a quaternary ammonium salt, a quaternary phosphonium salt and an organic amine, contained in the crosslinkable composition of the present invention, functions as a crosslinking agent as well as a coexisting organic peroxide. The quaternary ammonium salt or the quaternary phosphonium salt is preferably one which acts as a base in the crosslinking reaction. At least one of each of the quaternary ammonium salt, the quaternary phosphonium salt and the organic amine may be contained, or only one of them may be contained.

The above quaternary ammonium salt may, for example, be tetrabutylammonium hydroxide (hereinafter referred to as TBAH), tetrabutylammonium bromide, tetrabutylammonium chloride, phenyltrimethylammonium bromide, tetrapropylammonium bromide, tetrabutylammonium fluoride, tetrapropylammonium hydroxide, benzyltrimethylammonium iodide, benzyltripropylammonium chloride, benzyltriethylammonium bromide, benzyltriethylammonium chloride, benzyltrimethylammonium chloride, tetramethylammonium bromide, tetramethylammonium chloride, tetramethylammonium iodide, tetramethylammonium hydroxide, tetraethylammonium bromide, tetraethylammonium chloride, tetraethylammonium iodide, tetraethylammonium hydroxide, 8-methyl-1,8-diazabicyclo[5.4.0]-7-undecenium chloride, 8-methyl-1,8-diazabicyclo[5.4.0]-7-undecenium iodide, 8-methyl-1,8-diazabicyclo[5.4.0]-7-undecenium hydroxide, 8-methyl-1,8-dizaobicyclo[5.4.0]-7-undecenium methylsulfate, 8-ethyl-1,8-diazabicyclo[5.4.0]-7-undecenium bromide, 8-propyl-1,8-diazabicyclo[5.4.0]-7-undecenium bromide, 8-dodecyl-1,8-diazabicyclo[5.4.0]-7-undecenium chloride, 8-dodecyl-1,8-diazabicyclo[5.4.0]-7-undecenium hydroxide, 8-eicosyl-1,8-diazabicyclo[5.4.0]-7-undecenium chloride, 8-tetracosyl-1,8-diazabicyclo[5.4.0]-7-undecenium chloride, 8-benzyl-1,8-diazabicyclo[5.4.0]-7-undecenium chloride (hereinafter referred to as DBU-B), 8-benzyl-1,8-diazabicyclo[5.4.0]-7-undecenium hydroxide, 8-phenethyl-1,8-diazabicyclo[5.4.0]-7-undecenium chloride or 8-(3-phenylpropyl)-1,8-diazabicyclo[5.4.0]-7-undecenium chloride.

Among them, TBAH is preferred with a view to improving the crosslinking property or the physical property of the crosslinked product.

The above quaternary phosphonium salt may, for example, be N-phenyltriphenylphosphonium bromide, tetrabutylphosphonium chloride, benzyltriphenylphosphonium chloride (hereinafter referred to as BTPPC), benzyltrimethylphosphonium chloride, benyzyltributylphosphonium chloride, tributylallylphosphonium chloride, tributyl-2-methoxypropylphosphonium chloride or benzylphenyl(dimethylamino)phosphonium chloride, and among them, BTPPC is preferred with a view to improving the crosslinking property and the physical property of a crosslinked product.

The above organic amine may, for example, be laurylamine, stearylamine, oleylamine, distearylamine, dimethyllaurylamine, dimethylmyristylamine, dimethylpalmitylamine, dimethylstearylamine, 1,8-diazobicyclo[5,4,0]undecene-7 (hereinafter referred to as DBU) or 1,4-diazabicyclo[2.2.2]octane.

Among them, DBU is preferred with a view to improving the crosslinking property and the physical property of a crosslinked product.

The total content of the quaternary ammonium salt, the quaternary phosphonium salt and the organic amine in the above crosslinkable composition is preferably from 0.05 to 10 parts by mass, more preferably from 0.07 to 5 parts by mass, particularly preferably from 0.1 to 3 parts by mass, based on 100 parts by mass of the copolymer (X). When the total content of the quaternary ammonium salt and the quaternary phosphonium salt is within the above range, the crosslinking property and the physical property of a crosslinked product are excellent.

In the crosslinkable composition of the present invention, a known additive such as a coloring pigment, a filler or a reinforcing agent, as a rubber material, may be blended as the case requires. The filler or the reinforcing agent may, for example, be carbon black, titanium oxide, silicon dioxide, clay or talc.

In the crosslinkable composition of the present invention, a fluorinated polymer containing no structural units based on TFE and P (hereinafter, also referred to as another fluorinated polymer) other than the copolymer (X), may be blended.

Such another fluorinated polymer may, for example, be a poly TFE, a poly VdF, a poly CTFE or a TFE/ethylene copolymer.

In a case where the crosslinkable composition of the present invention contains the above another fluorinated polymer, its content may, for example, be preferably from 0.1 to 20 parts by mass, more preferably from 1 to 15 parts by mass, furthermore preferably from 5 to 10 parts by mass, based on 100 parts by mass of the copolymer (X). Within the above range, the physical property of the above another fluorinated polymer can be made use of for a crosslinked product without impairing the gist of the present invention.

However, it is preferred that the above another fluorinated polymer contains substantially no fluorinated polymer having VdF units. The above fluorinated polymer having the VdF units may, for example, be a poly VdF or a TFE/VdF copolymer. As mentioned below, if the VdF units are present in a crosslinked product, particles are easily produced by plasma irradiation. Here, the crosslinkable composition of the present invention containing no fluorinated polymer having the VdF units, means that the content of the fluorinated polymer having the VdF units is preferably less than 0.1 part by mass, more preferably less than 0.01 part by mass, furthermore preferably substantially at most detective limit, based on 100 parts by mass of the copolymer (X) in the crosslinkable composition.

The metal element content in the crosslinkable composition of the present invention is less than 1 part by mass, based on 100 parts by mass of the copolymer (X). The content is preferably less than 0.1 part by mass, more preferably less than 0.01 part by mass, furthermore preferably substantially at most detective limit, most preferably 0 part by mass (not contained). If the metal element is contained, it is difficult to prevent production of particles upon plasma irradiation to a crosslinked product.

The metal element is considered to be e.g. one derived from impurities during production of the copolymer (X) or one contained in a form of a salt of a saturated or unsaturated fatty acid as an additive to be blended in a crosslinkable composition. The fatty acid may, for example, be a higher fatty acid having at least 10 carbon atoms such as stearic acid, oleic acid, palmitic acid or lauric acid.

A device to mix the respective materials at the time of preparing the crosslinkable composition of the present invention, may, for example, be a rubber mixing device such as a roll, a kneader, a banbury mixer or an extruder.

### <Crosslinked product>

The crosslinked product of the present invention is obtained by crosslinking the copolymer (X) in the above-mentioned crosslinkable composition of the present invention.

The compression set of the crosslinked product of the present invention is measured in accordance with JIS K6262. The compression set is preferably at most 65%, more preferably at most 40%, furthermore preferably at most 30%, under conditions at 200°C for 22 hours and at a compressibility of 25%. The lower limit is not particularly limited but may be 0%.

The tensile strength of the crosslinked product of the present invention is measured in such a manner that the crosslinked product is formed into a 1 mm-thick sheet and punched out by a number 4 dumbbell so as to prepare a sample, followed by measuring in accordance with JIS K6251 at 23°C. The tensile strength is preferably at least 15 MPa, more preferably at least 20 MPa, furthermore preferably at least 22 MPa. The upper limit is not particularly limited, but may, for example, be about 30 MPa.

The 100% tensile stress (100% modulus) measured in accordance with JIS K6251 in the same manner as the above, is preferably at least 2.5 MPa, more preferably at least 3.5 MPa, furthermore preferably at least 4.5 MPa. The upper limit is not particularly limited, but may, for example, be about 30 MPa.

The elongation measured in accordance with JIS K6251 in the same manner as the above is preferably at least 250%, more preferably at least 300%, furthermore preferably at least 350%. The upper limit is not particularly limited, but may, for example, be about 1,000%.

The crosslinked product of the present invention is preferably produced by the method for producing a crosslinked product of the present invention as explained below, but is not limited to one produced by the following production method.

### <Method for producing crosslinked product>

A method for producing the crosslinked product may, for example, be a method of heating the above-mentioned crosslinkable composition to crosslink the copolymer (X) thereby to produce a crosslinked product.

As the method of heating a crosslinkable composition for crosslinking, various methods such as heat press crosslinking, steam crosslinking or hot air crosslinking may be mentioned. Among them, a suitable method may be selected by taking into consideration the shape or the use of a crosslinked product to be formed. The crosslinking temperature is preferably from 100 to 400°C within a range of from a few seconds to 24 hours.

By heat pressing the crosslinkable composition, the crosslinkable composition may be crosslinked and at the same time formed into a crosslinked product. Or the crosslinkable composition may be preliminarily formed to obtain a formed product, which is crosslinked to obtain a crosslinked product.

A method of forming the crosslinkable composition may, for example, be compression molding, injection molding, extrusion, calendaring, or dipping or coating after dissolved in a solvent.

As a method for producing the crosslinked product, it is preferred that the crosslinkable composition is primarily crosslinked by heating so as to obtain a crosslinked product, and further the crosslinked product is secondarily crosslinked by heating. The secondary crosslinking improves and stabilizes mechanical properties, compression set or other properties of the crosslinked product. The heating conditions at the time of carrying out the secondary crosslinking are preferably from about 30 minutes to about 48 hours at from 100 to 300°C.

As the method of crosslinking the crosslinkable composition to obtain a crosslinked product, a method of irradiating the crosslinkable composition with radiation, is also preferred instead of the heating method. The irradiation to be applied may, for example, be electron rays or ultraviolet rays. The amount of irradiation with electron rays is preferably from 0.1 to 30 Mrad, more preferably from 1 to 20 Mrad. In the case of crosslinking by irradiation with radiation, the crosslinkable composition may be a composition containing no organic peroxide.

### <Sealing material for semiconductor production equipment>

The crosslinked product of the present invention is excellent in durability against treatment such as plasma, UV, reactive ion, laser or etching gas, which may decompose or corrode a synthetic resin, and therefore it is possible to prevent e.g. production of particles upon plasma irradiation. Accordingly, it is suitable as a sealing material (member to keep airtightness) for a chamber (treatment room) where the above treatment is carried out. An equipment provided with the above chamber may, for example, be a semiconductor production equipment, and among them, a semiconductor production equipment provided with a chamber to be irradiated with plasma is suitable. According to the sealing material for a semiconductor production equipment containing the crosslinked product of the present invention, it is possible to prevent production of particles when subjected to the above treatment, and therefore it is possible to prevent deterioration of cleanability in a chamber due to flying of the particles in the chamber.

The semiconductor production equipment may, for example, be an etching device such as a dry etching device, a plasma etching device, a reactive ion etching device, a reactive ion beam etching device, a sputtering etching device, an ion beam etching device, a wet etching device or an ashing device; a cleaning device such as a dry-type etching cleaning device, an UV/O₃ cleaning device, an ion beam cleaning device, a laser beam cleaning device, a plasma cleaning device, a gas etching cleaning device, an extraction cleaning device, a Soxhlet extraction cleaning device, a high-temperature high-pressure extraction cleaning device, a microwave extraction cleaning device or a super critical extraction cleaning device; an exposure device such as a stepper or a Coater/developer; a polishing device such as a CMP device; a film-forming device such as a CVD device or a sputtering device; or a diffusion/ion injection device such as an oxygen diffusion device or a ion injection device.

### <Function and effect>

The present inventors have found that, if a copolymer having VdF units is contained in a crosslinkable composition, a resulting crosslinked product is inferior in plasma resistance, whereby it is difficult to prevent production of particles upon plasma irradiation, and this finding was experimentally confirmed. Details of this reason are unclear, but one of the reasons is presumed to be such that the presence of a structure of {-CF₂-CH₂-CF₂-CH₂-} having at least two VdF units arranged or a structure of {-CF₂-CH₂-CF₂-CF₂-} having a VdF unit and a TFE unit arranged, may induce an electronic state where protons of -CH₂- sandwiched from both sides, by -CF₂- as an electron attracting group are readily eliminated. That is, it has been presumed that when the chemical activation energy is applied by plasma irradiation, the protons are eliminated and the copolymer is partially decomposed, whereby particles are produced. Therefore, it is assumed that it is possible to prevent production of particles from a crosslinked product, as the content of VdF units in the copolymer becomes lower.

The present inventors have further conducted studies and as a result, have found that, if metal elements are contained in a crosslinked product, the crosslinked product is inferior in plasma resistance, whereby it is difficult to prevent production of particles upon plasma irradiation, and this finding was experimentally confirmed. Details of this reason are unclear, but one of the reasons is presumed to be such that metal elements activated by the plasma irradiation are reacted with materials constituting a crosslinked product and thereby decompose the crosslinked product, whereby particles are produced. Accordingly, it is assumed that it is possible to prevent production of particles, as the metal element content in the crosslinked product becomes lower.

### EXAMPLES

Now, the present invention will be described in detail with reference to Examples, but it should be understood that the present invention is by no means restricted thereto.

### [Compound used to prepare copolymer or composition, abbreviation thereof, manufacturer thereof, etc.]

TAIC: Triallyl isocyanurate, manufactured by Nippon Kasei Chemical Co., Ltd.
Perkadox 14R-P (product name): a,a'-bis(t-butylperoxy)-p-diisopropylbenzene, manufactured by Kayaku Akzo Corporation
PERHEXA 25B (product name): 2,5-dimethyl-2,5-di(t-butylperoxy)-hexane, manufactured by NOF CORPORATION
MT Carbon (product name): Carbon black, manufactured by CANCARB
Sodium stearate: NONSOUL SN-1 (product name), manufactured by NOF CORPORATION,
Calcium stearate: Manufactured by Kanto Chemical Co., Inc.
TBAH: Tetrabutylammonium hydroxide (37% methanol solution), manufactured by Tokyo Chemical Industry Co., Ltd. In Table 1, it was shown as an amount calculated as 100%.
BTPPC; Benzyl triphenylphosphonium chloride, manufactured by Tokyo Chemical Industry Co., Ltd.
DBU; 1,8-diazobicyclo[5.4.0]undecene-7, manufactured by Tokyo Chemical Industry Co., Ltd.

### [Preparation of copolymer 1 (TFE/propylene/CF₂=CFO(CF₂)₄OCF=CF₂ copolymer)]

A pressure reactor made of stainless steel having an internal capacity of 3,200 mL equipped with a stirring anchor blade was deaerated, and to this reactor, 1,500 g of deionized water, 58.5 g of disodium hydrogen phosphate dodecahydrate, 0.7 g of sodium hydroxide, 197 g of tert-butanol, 9 g of sodium lauryl sulfate, 9 g of 1,4-diiodoperfluorobutane, 5.6 g of CF₂=CFO(CF₂)₄OCF=CF₂ and 6 g of ammonium persulfate were added. Further, an aqueous solution having 0.4 g of disodium ethylenediaminetetraacetate dihydrate and 0.3 g of ferrous sulfate heptahydrate dissolved in 100 g of deionized water, was added to the reactor. At that time, the pH of the aqueous medium in the reactor was 9.5.

Then, a monomer mixed gas of TFE/propylene=88/12 (molar ratio) was injected at 25°C so that the internal pressure of the reactor became 2.50 MPaG. The anchor blade was rotated at 300 rpm, and then a 2.5 mass% aqueous solution of sodium hydroxymethanesulfinate dihydrate (hereinafter referred to as Rongalite) having the pH adjusted to 10.0 by sodium hydroxide (hereinafter this aqueous solution will be referred to as a Rongalite 2.5 mass% aqueous solution) was added to the reactor to initiate the polymerization reaction. From then on, the Rongalite 2.5 mass% aqueous solution was continuously added to the reactor by a high pressure pump.

When the total amount of the TFE/propylene monomer mixed gas injected reached 1,000 g, the addition of the Rongalite 2.5 mass% aqueous solution was terminated, the temperature in the reactor was decreased to 10°C to terminate the polymerization reaction thereby to obtain a latex of the copolymer 1. The amount of the Rongalite 2.5 mass% aqueous solution added was 68 g. The polymerization time was 6 hours.

A 5 mass% aqueous solution of calcium chloride was added to the latex so as to coagulate the latex of the copolymer 1, thereby to precipitate the copolymer 1. The copolymer 1 was subjected to filtration and collected. Then, the copolymer 1 was washed with deionized water and dried in an oven at 100°C for 15 hours to obtain 980 g of white copolymer 1.

The iodine content of the copolymer 1 measured by the after-mentioned method was 0.2 mass%. Further, the unit composition of the copolymer 1 was such that TFE units/P units/Structural units based on CF₂=CFO(CF₂)₄OCF=CF₂ = 56/43.9/0.1 by the molar ratio.

### [Preparation of copolymer 2 (TFE/propylene copolymer)]

A pressure reactor made of stainless steel having an internal capacity of 3,200 mL equipped with a stirring anchor blade was deaerated, and to this reactor, 1,500 g of deionized water, 58.5 g of disodium hydrogen phosphate dodecahydrate, 0.7 g of sodium hydroxide, 197 g of tert-butanol, sodium lauryl sulfate, 3.2 g of 1,4-diiodoperfluorobutane and 6 g of ammonium persulfate were added. Further, an aqueous solution having 0.4 g of disodium ethylenediaminetetraacetate dihydrate and 0.3 g of ferrous sulfate heptahydrate dissolved in 100 g of deionized water, was added to the reactor. At that time, the pH of the aqueous medium in the reactor was 9.5.

Then, a monomer mixed gas of TFE/propylene=88/12 (molar ratio) was injected at 25°C so that the internal pressure of the reactor became 2.50 MPaG. The anchor blade was rotated at 300 rpm, and then a 2.5 mass% Rongalite having the pH adjusted to 10.0 by sodium hydroxide was added to the reactor to initiate the polymerization reaction. From then on, the Rongalite 2.5 mass% aqueous solution was continuously added to the reactor by a high pressure pump.

When the total amount of the TFE/propylene monomer mixed gas injected reached 1,000 g, the addition of the Rongalite 2.5 mass% aqueous solution was terminated, the temperature in the reactor was decreased to 10°C to terminate the polymerization reaction thereby to obtain a latex of the copolymer 2. The amount of the Rongalite 2.5 mass% aqueous solution added was 68 g. The polymerization time was about 6 hours.

A 5 mass% aqueous solution of calcium chloride was added to the latex so as to coagulate the latex of the copolymer 2, thereby to precipitate the copolymer 2. The copolymer 2 was subjected to filtration and collected. Then, the copolymer 2 was washed with deionized water and dried in an oven at 100°C for 15 hours to obtain 980 g of white copolymer 2.

The iodine content of the copolymer 2 measured by the after-mentioned method was 0.2 mass%. Further, the unit composition of the copolymer 2 was such that TFE units/P units = 56/44 by the molar ratio.

### [Copolymer 3]

A commercially available VdF/TFE/HFP terpolymer being an organic peroxide crosslinking type copolymer and having a fluorine content of 71 mass% and a Mooney viscosity (ML₁₊₄ 100°C) 50, was used.

The iodine content in the copolymer 3, measured by the after-mentioned method, was 0.3 mass%. The unit composition of the copolymer 3 was such that VdF units/TFE units/HFP units=50/30/20 by the molar ratio.

### [Measurement of copolymer composition]

With respect to the unit compositions of the above copolymers 1 to 3, the content of TFE units in the copolymer was calculated by fluorine content analysis, and the content of structural units based on divinyl ether was calculated by infrared absorption spectrum.

### [Measurement of iodine content]

The iodine content of the copolymer was quantified by using an apparatus in which an automated sample combustion device for ion chromatography pretreatment AQF-100 manufactured by Dia Instruments Co., Ltd., and ion chromatography were combined.

### [Metal element content]

0.5 g of the copolymer was fired and incinerated at 600°C for 60 minutes in the air, and the resulting ash was dissolved in a sulfuric acid aqueous solution to obtain a solution. 10 ml of the solution thus obtained, was subjected to measurement by IPC-MS (manufactured by Agilent Technologies Inc.) to obtain a metal element content. Regarding the total amount of metals produced, a case where the total amount is less than 1 part by mass based on 100 parts by mass of the copolymer, was regarded as "○ " (pass), and a case where the total amount is at least 1 part by mass, was regarded as "×" (fail). The type of metal elements measured herein is as mentioned above, and the metal element content is a total content of all metal elements.

### [Examples 1 to 4, Comparative Examples 1 to 5]

Properties of each crosslinkable composition and each crosslinked product, obtained by the above methods and the following methods, were measured. The results are shown in Table 2.

### [Preparation of crosslinkable composition]

The copolymers 1 to 3, a filler, a crosslinking aid, an organic peroxide and an onium salt or a processing aid, blended in a proportion (unit: part by mass) as shown in Table 1, were kneaded by a biaxial roll, and the crosslinkable compositions in Examples and Comparative Examples were obtained, respectively.

### [Measurement of crosslinking degree and crosslinking rate]

The crosslinking degrees and the crosslinkabilities of the crosslinkable compositions in Ex. 1 to 4 and Comp. Ex. 1 to 4, blended as mentioned above, were measured under conditions at 170°C for 12 minutes with an amplitude angle of 3°, by using a crosslinking property measuring machine (RPA (product name), manufactured by Alpha Technology Co., Ltd.). In Comp. Ex. 5, measurement was carried out while the temperature was changed to 160°C. When MH represents the maximum torque and ML represents the minimum torque, MH-ML means the crosslinking degree, and a higher value means excellent crosslinkability. If MH-ML is at most 20, forming failure tends to occur. t₉₀ is a value defined as a time (crosslinking rate) until the torque value reaches 90% of the maximum torque after initiation of a curing process, and t₉₀ shows an approximate value of an optimum crosslinking time. If t₉₀ is long, it takes time to complete forming, and therefore the production efficiency is low.

### [Preparation of crosslinked product]

A crosslinkable composition prepared in each of Ex. 1 to 4 and Comp. Ex. 1 to 4 was formed into a sheet of 100 mm × 100 mm × 1 mm by heat pressing at 170°C for 10 minutes (primary crosslinking). In Comp. Ex. 5, the heat pressing was carried out while the temperature was changed to 160°C. Each sheet was further heated in a gear oven at 200°C for 4 hours to carry out secondary crosslinking, whereby a crosslinked product (crosslinked rubber sheet) was obtained. However, in a case where the crosslinkable compositions in Comp. Ex. 1 and Comp. Ex. 4 were used, it was impossible to prepare a crosslinked rubber sheet due to crosslinking failure.

Three sheets of samples were punched out from each crosslinked rubber sheet prepared by a number 4 dumbbell, and the crosslinking rubber properties were measured by the following measurement methods. The measurement results of each item are shown in Table 2.

### [Tensile strength]

In accordance with JIS K6251 (2010), the tensile strength was measured at 23°C.

### [100% tensile stress (modulus M₁₀₀)]

In accordance with JIS K6251 (2010), the 100% tensile stress was measured at 23°C.

### [Elongation]

In accordance with JIS K6251 (2010), the elongation was measured at 23°C.

### [Compression set]

A P26-size O-ring was prepared in the same manner as in the above preparation of a crosslinked rubber sheet. In accordance with JIS K6262 (2006), the compression set of the O-ring was measured under conditions at 200°C for 22 hours at compressibility of 25%.

### [Mass change]

A P26-size O-ring was prepared in the same manner as in the above preparation of a crosslinked rubber sheet. This O-ring was subjected to plasma irradiation by using a plasma device (manufactured by Yamato Scientific Co., Ltd., plasma cleaner PDC210), under conditions where a gas flow rate was 30 CCM, a frequency was 13.6 Hz, an RF output was 300 W, a pressure was 42 Pa, and an irradiation time was 270 minutes.

The O-ring after the irradiation was washed by ultrasonication in pure water. Thereafter, the O-ring was dried at 100°C for 24 hours to measure a mass. "○" (good) represents a case where the mass change from the mass before plasma irradiation is at most 1.0%, and "×" (poor) represents a case where the mass change from the mass before plasma irradiation exceeds 1.0%.

The degree of the mass change measured herein correlates with the level of the production of particles upon plasma irradiation. Particles produced in the O-ring are dispersed in pure water by washing in pure water, and therefore the larger the number of particles produced, the larger the mass change becomes.

**[Table 1]**

| | Ex. 1 | Ex. 2 | Ex. 3 | Ex. 4 | Comp. Ex. 1 | Comp. Ex. 2 | Comp. Ex. 3 | Comp. Ex. 4 | Comp. Ex. 5 |
|---|---|---|---|---|---|---|---|---|---|
| Copolymer 1 | 100 | 100 | | 100 | 100 | 100 | 100 | | |
| Copolymer 2 | | | 100 | | | | | 100 | |
| Copolymer 3 | | | | | | | | | 100 |
| MT-Carbon | 20 | 20 | 30 | 30 | 20 | 20 | 20 | 30 | 20 |
| TAIC | 4 | 4 | 5 | 3 | 4 | 4 | 4 | 5 | 4 |
| Perkadox 14 | 1 | 1 | 1.5 | 1 | 1 | 1 | 1 | 1.5 | |
| PERHEXA 25B | | | | | | | | | 1.5 |
| Sodium stearate | | | | | | 1 | | | |
| Calcium stearate | | | | | | | 1 | | |
| TBAH | 0.4 | | | | | | | | |
| BTPPC | | 0.4 | 0.8 | | | | | | |
| DBU | | | | 0.5 | | | | | |
| Metal element content | ○ | ○ | ○ | ○ | ○ | × | × | ○ | ○ |

**[Table 2]**

| | Ex. 1 | Ex. 2 | Ex. 3 | Ex. 4 | Comp. Ex. 1 | Comp. Ex. 2 | Comp. Ex. 3 | Comp. Ex. 4 | Comp. Ex. 5 |
|---|---|---|---|---|---|---|---|---|---|
| Crosslinking degree MH-ML (dNm) | 59.2 | 64.4 | 33.3 | 58.45 | 2.7 | 71.7 | 71.4 | 17.6 | 111.5 |
| Crosslinking rate T90 (min) | 4.9 | 5.2 | 4.9 | 6.2 | 10.3 | 3.7 | 3.6 | 7.3 | 3.5 |
| Tensile strength (Mpa) | 23.6 | 22.3 | 15.2 | 16.1 | - | 25.1 | 26.5 | - | 20.6 |
| 100% modulus (Mpa) | 2.9 | 3.6 | 4.7 | 5.3 | - | 3.7 | 3.9 | - | 3.6 |
| Elongation (%) | 323 | 296 | 380 | 215 | - | 291 | 293 | - | 293 |
| Compression set (200°C 22h) p26 O-ring | 28 | 27 | 61 | 28 | - | 24 | 24 | - | 28 |
| Mass change (%) | ○ | ○ | ○ | ○ | - | × | × | - | × |

As mentioned above, the crosslinkable compositions in Ex. 1 to 4 were confirmed to have excellent crosslinkability. Further, crosslinked products obtained by crosslinking the crosslinkable compositions in Ex. 1 to 4 were confirmed to have excellent rubber properties, as well as small mass change and less production of particles upon plasma irradiation.

On the other hand, the crosslinkable compositions in Comp. Ex. 1 and 4 contain neither quaternary ammonium salt nor quaternary phosphonium salt, whereby the crosslinkability was poor, and it was therefore impossible to obtain a crosslinked product of which properties were measureable. The crosslinkable compositions in Comp. Ex. 2 and 3 contain an alkali metal salt or an alkaline earth metal salt of stearic acid as a processing aid, and therefore it was confirmed that the mass change of the crosslinked product was large and a large number of particles were produced upon plasma irradiation. The polymer in Comp. Ex. 5 has VdF units, and therefore it was confirmed that the mass change was large and a large number of particles were produced upon plasma irradiation. Accordingly, the crosslinked products in Comp. Ex. 2, 3 and 5 were unsuitable as a sealing material for a semiconductor production equipment.

### INDUSTRIAL APPLICABILITY

According to the crosslinkable composition of the present invention, it is possible to obtain a crosslinked product excellent in plasma resistance. The resulting crosslinked product is suitable as a material for an O-ring, a sheet, a gasket, an oil seal, a diaphragm, a V-ring, etc. Further, it is also applicable to e.g. a heat resistant chemical resistant sealing material, a heat resistant oil resistant sealing material, a wire covering material, a sealing material for a semiconductor device, a corrosion resistant rubber coating material or a urea resistant sealing material for a grease, and it is particularly suitable as a sealing material for a semiconductor production equipment.

The entire disclosure of Japanese Patent Application No. 2015-226737 filed on November 19, 2015 including specification, claims and summary is incorporated herein by reference in its entirety.

## Claims

1. A crosslinkable composition comprising the following copolymer (X), an organic peroxide, a crosslinking aid, and at least one member selected from the group consisting of a quaternary ammonium salt, a quaternary phosphonium salt and an organic amine, wherein the metal element content is less than 1 part by mass based on 100 parts by mass of the copolymer (X).
Copolymer (X): A copolymer having an iodine atom and also having structural units based on tetrafluoroethylene and structural units based on propylene, wherein the content of the structural units based on vinylidene fluoride is less than 0.1 mol% in all structural units.

2. The crosslinkable composition according to Claim 1, wherein the total content of the structural units based on propylene and the structural units based on tetrafluoroethylene is from 90 to 100 mol% in all structural units of the copolymer (X).

3. The crosslinkable composition according to Claim 1 or 2, wherein the molar ratio of the structural units based on tetrafluoroethylene to the structural units based on propylene, is from 30/70 to 99/1.

4. The crosslinkable composition according to any one of Claims 1 to 3, wherein the copolymer (X) has structural units based on a monomer represented by the following formula (I):
CR¹R²=CR³-R⁴-CR⁵=CR⁶R⁷ (I)
wherein each of R¹, R², R³, R⁵, R⁶ and R⁷ which are independent of each other, is a hydrogen atom, a fluorine atom or a methyl group, R⁴ is a C₁₋₁₀ perfluoroalkylene group or a group having an etheric oxygen atom inserted between a carbon-carbon bond of the perfluoroalkylene group.

5. The crosslinkable composition according to Claim 4, wherein the proportion of the structural units based on the monomer represented by the formula (I) is from 0.1 to 1.5 mol% in all structural units of the copolymer (X).

6. The crosslinkable composition according to any one of Claims 1 to 5, wherein the copolymer (X) is a copolymer having structural units based on a monomer having an iodine atom or a copolymer having an iodine atom derived from a chain transfer agent containing the iodine atom.

7. The crosslinkable composition according to any one of Claims 1 to 6, wherein the content of the iodine atom in the copolymer (X) is from 0.01 to 5.0 mass%.

8. The crosslinkable composition according to any one of Claims 1 to 7, wherein the content of the crosslinking aid is from 0.05 to 20 parts by mass, the content of the organic peroxide is from 0.05 to 10 parts by mass, and the total content of the quaternary ammonium salt, the quaternary phosphonium salt and the organic amine is from 0.05 to 10 parts by mass, based on 100 parts by mass of the copolymer (X).

9. The crosslinkable composition according to any one of Claims 1 to 8, which contains no fatty acid metal salt.

10. A crosslinked product obtained by crosslinking the copolymer (X) in the crosslinkable composition as defined in any one of Claims 1 to 9.

11. A sealing material for a semiconductor production equipment, containing the crosslinked product as defined in Claim 10.

## Patentansprüche

1. Vernetzbare Zusammensetzung, umfassend das folgende Copolymer (X), ein organisches Peroxid, ein Vernetzungshilfsmittel und mindestens ein Mitglied, ausgewählt aus der Gruppe, bestehend aus einem quartären Ammoniumsalz, einem quartären Phosphoniumsalz und einem organischen Amin, wobei der Metallelementgehalt weniger als 1 Massenteil, bezogen auf 100 Massenteile des Copolymers (X), beträgt.
Copolymer (X): Copolymer mit einem lodatom sowie mit Struktureinheiten auf der Basis von Tetrafluorethylen und Struktureinheiten auf der Basis von Propylen, wobei der Gehalt der Struktureinheiten auf der Basis von Vinylidenfluorid in allen Struktureinheiten weniger als 0,1 Mol-% beträgt.

2. Vernetzbare Zusammensetzung nach Anspruch 1, wobei der Gesamtgehalt der Struktureinheiten auf der Basis von Propylen und der Struktureinheiten auf der Basis von Tetrafluorethylen in allen Struktureinheiten des Copolymers (X) 90 bis 100 Mol-% beträgt.

3. Vernetzbare Zusammensetzung nach Anspruch 1 oder 2, wobei das Molverhältnis der Struktureinheiten auf der Basis von Tetrafluorethylen zu den Struktureinheiten auf der Basis von Propylen 30/70 bis 99/1 beträgt.

4. Vernetzbare Zusammensetzung nach einem der Ansprüche 1 bis 3, wobei das Copolymer (X) Struktureinheiten auf der Basis eines Monomers, dargestellt durch die folgende Formel (I), aufweist:
CR¹R²=CR³-R⁴-CR⁵=CR⁶R⁷ (I)
wobei jedes von R¹, R², R³, R⁵, R⁶ und R⁷, die unabhängig voneinander sind, ein Wasserstoffatom, ein Fluoratom oder eine Methylgruppe ist, R⁴ eine C₁₋₁₀-Perfluoralkylengruppe oder eine Gruppe mit einem zwischen einer Kohlenstoff-Kohlenstoff-Bindung der Perfluoralkylengruppe eingefügten etherischen Sauerstoffatom ist.

5. Vernetzbare Zusammensetzung nach Anspruch 4, wobei der Anteil der Struktureinheiten auf der Basis des Monomers, dargestellt durch die Formel (I), in allen Struktureinheiten des Copolymers (X) von 0,1 bis 1,5 Mol-% beträgt.

6. Vernetzbare Zusammensetzung nach einem der Ansprüche 1 bis 5, wobei das Copolymer (X) ein Copolymer mit Struktureinheiten auf der Basis eines Monomers mit einem lodatom oder ein Copolymer mit einem lodatom, abgeleitet von einem das lodatom enthaltenden Kettenübertragungsmittel, ist.

7. Vernetzbare Zusammensetzung nach einem der Ansprüche 1 bis 6, wobei der Gehalt des lodatoms in dem Copolymer (X) 0,01 bis 5,0 Massen-% beträgt.

8. Vernetzbare Zusammensetzung nach einem der Ansprüche 1 bis 7, wobei der Gehalt des Vernetzungshilfsmittels 0,05 bis 20 Massenteile, der Gehalt des organischen Peroxids 0,05 bis 10 Massenteile und der Gesamtgehalt des quartären Ammoniumsalzes, des quartären Phosphoniumsalzes und des organischen Amins 0,05 bis 10 Massenteile, bezogen auf 100 Massenteile des Copolymers (X), beträgt.

9. Vernetzbare Zusammensetzung nach einem der Ansprüche 1 bis 8, die kein Fettsäuremetallsalz enthält.

10. Vernetztes Produkt, erhalten durch das Vernetzen des Copolymers (X) in der vernetzbaren Zusammensetzung nach einem der Ansprüche 1 bis 9.

11. Dichtungsmaterial für eine Halbleiterproduktionsausrüstung, enthaltend das vernetzte Produkt nach Anspruch 10.

## Revendications

1. Composition réticulable comprenant le copolymère suivant (X), un peroxyde organique, un auxiliaire de réticulation et au moins un élément sélectionné parmi le groupe constitué d'un sel d'ammonium quaternaire, d'un sel de phosphonium quaternaire et d'une amine organique, dans laquelle la teneur en élément métallique est inférieure à 1 partie en masse basée sur 100 parties en masse du copolymère (X).
Copolymère (X) : un copolymère ayant un atome d'iode et ayant également des unités structurelles basées sur le tétrafluoroéthylène et des unités structurelles basées sur le propylène, dans laquelle la teneur en les unités structurelles basées sur le fluorure de vinylidène est inférieure à 0,1 % en mole dans toutes les unités structurelles.

2. Composition réticulable selon la revendication 1, dans laquelle la teneur totale en les unités structurelles basées sur le propylène et les unités structurelles basées sur le tétrafluoroéthylène va de 90 à 100 % en mole dans toutes les unités structurelles du copolymère (X).

3. Composition réticulable selon la revendication 1 ou 2, dans laquelle le rapport molaire des unités structurelles basées sur le tétrafluoroéthylène sur les unités structurelles basées sur le propylène va de 30/70 à 99/1.

4. Composition réticulable selon l'une quelconque des revendications 1 à 3, dans laquelle le copolymère (X) a des unités structurelles basées sur un monomère représenté par la formule suivante (I) :
CR¹R²=CR³-R⁴-CR⁵=CR⁶R⁷ (I)
dans laquelle chacun de R¹, R², R³, R⁴, R⁵, R⁶ et R⁷ qui sont indépendants l'un de l'autre est un atome d'hydrogène, un atome de fluor ou un groupe méthyle, R⁴ est un groupe perfluoroalkylène en C₁₋₁₀ ou un groupe ayant un atome d'oxygène éthérique inséré entre une liaison carbone-carbone du groupe perfluoroalkylène.

5. Composition réticulable selon la revendication 4, dans laquelle la proportion en les unités structurelles basées sur le monomère représenté par la formule (I) va de 0,1 à 1,5 % en mole dans toutes les unités structurelles du copolymère (X).

6. Composition réticulable selon l'une quelconque des revendications 1 à 5, dans laquelle le copolymère (X) est un copolymère ayant des unités structurelles basées sur un monomère ayant un atome d'iode ou un copolymère ayant un atome d'iode dérivé d'un agent de transfert de chaîne contenant l'atome d'iode.

7. Composition réticulable selon l'une quelconque des revendications 1 à 6, dans laquelle la teneur en l'atome d'iode dans le copolymère (X) va de 0,01 à 5,0 % en masse.

8. Composition réticulable selon l'une quelconque des revendications 1 à 7, dans laquelle la teneur en l'auxiliaire de réticulation va de 0,05 à 20 parties en masse, la teneur en le peroxyde organique va de 0,05 à 10 parties en masse et la teneur totale en le sel d'ammonium quaternaire, le sel de phosphonium quaternaire et l'aminé organique va de 0,05 à 10 parties en masse, basées sur 100 parties en masse du copolymère (X).

9. Composition réticulable selon l'une quelconque des revendications 1 à 8, qui ne contient aucun sel métallique d'acide gras.

10. Produit réticulé obtenu en réticulant le copolymère (X) dans la composition réticulable selon l'une quelconque des revendications 1 à 9.

11. Matériau d'étanchéité pour un équipement de production de semi-conducteurs, contenant le produit réticulé selon la revendication 10.
